# EUROPEAN PATENT APPLICATION

(11) **EP 4 682 999 A1**
(43) Date of publication of application: **21.01.2026**
(21) Application number: 24803700.4
(22) Date of filing: 08.05.2024
(51) Int. Cl.: H01M 4/66, H01M 10/052, H01M 4/04, H01M 10/058, H01M 4/02

(54) **ANODE FOR LITHIUM-FREE SECONDARY BATTERY AND LITHIUM-FREE SECONDARY BATTERY COMPRISING SAME**

(30) Priority: 09.05.2023 KR 20230059728; 22.04.2024 KR 20240053381
(71) Applicant: LG Energy Solution, Ltd., Seoul 07335 (KR); Korea Advanced Institute of Science and Technology, Daejeon 34141 (KR)
(72) Inventor: KIM, Sanha, Daejeon 34141 (KR); WON, Dongyeon, Daejeon 34122 (KR); YANG, Inyeong, Daejeon 34141 (KR)
(74) Representative: Hoffmann Eitle
(86) International application number: PCT/KR2024/006158
(87) International publication number: WO 2024/232647

(57) **Abstract**

The present disclosure relates to a negative electrode for lithium-free secondary battery which can improve the electrochemical and life time characteristics of a lithium-free secondary battery, a manufacturing method thereof and a lithium-free secondary battery. The negative electrode may include a conductive metal layer; and a lithium electrodeposition induction layer formed on the conductive metal layer and containing an intermetallic compound in which copper and zinc are bonded.

## Description

### [TECHNICAL FIELD]

### Cross Citation with Related Application(s)

This application claims the benefit of Korean Patent Application No. 10-2023-0059728 filed on May 9, 2023 and Korean Patent Application No. 10-2024-0053381 filed on April 22, 2024 in the Korean Intellectual Property Office, the disclosures of which are incorporated herein by reference in their entirety.

The present disclosure relates to a negative electrode for lithium-free secondary battery which can improve the electrochemical and life time characteristics of a lithium-free secondary battery, a manufacturing method thereof and a lithium-free secondary battery.

### [BACKGROUND]

Lithium metal batteries are batteries that apply a negative electrode active material made of lithium metal (Li-metal), and have the advantage of having a theoretically very high energy density and capacity compared to conventionally used batteries that apply graphite-based or lithium alloy-based negative electrode. Therefore, research and development of such lithium metal batteries continue in order to apply them to batteries requiring high energy density.

However, lithium metal batteries have disadvantages in that in a charge and discharge process, the volume change of the negative electrode is large, a needle-like lithium metal layer (lithium dendrite, etc.) grows, and due to the characteristic of the lithium metal having high reactivity, side reactions between the lithium metal layer and the electrolyte are generated, resulting in a large irreversible capacity. As a result, the lithium metal battery is not properly commercialized because the possibility of short circuit of the electrodes is high, and the stability and life time characteristics are not sufficient.

Recently, as an alternative to the lithium metal battery, research and interest are rising in lithium-free secondary batteries (or anode-free secondary batteries) that do not form a separate lithium metal layer or other negative electrode active material layer on the negative electrode current collector but form the negative electrode with the negative electrode current collector itself. As lithium is electrodeposited on the negative electrode current collector during charging, such a lithium-free secondary battery can be defined as a battery that utilizes the lithium metal as a negative electrode active material.

However, as a conventional lithium-free secondary batteries also utilizes lithium metal as a negative electrode active material, problems such as growth of lithium dendrites due to non-uniform growth of lithium metal may still appear.

In order to overcome such technical limitations, techniques such as manufacturing a current collector with a lithiophillic material or increasing the surface area of the current collector to induce uniform electrodeposition of lithium have been reported.

However, most of the processes applied to manufacture current collectors containing such lithiophillic materials or three-dimensional current collectors with a high surface area have the disadvantage of being long process times or very expensive, resulting in poor mass production. In addition, this method has additional problems, such as the difficulty in fabricating a thin current collector and the difficulty in fully utilizing the high energy density of a lithium-free secondary battery.

### [DETAILED DESCRIPTION OF THE INVENTION]

### [Technical Problem]

Therefore, it is an object of the present disclosure to provide a negative electrode for lithium-free secondary battery which can improve the electrochemical and life time characteristics of a lithium-free secondary battery by suppressing the growth of lithium dendrites or the like, and can be manufactured through a simplified process and with a thin thickness, and a manufacturing method thereof.

It is another object of the present disclosure to provide a lithium-free secondary battery which comprises the negative electrode and thus exhibits improved electrochemical and life time characteristics.

### [Technical Solution]

According to one embodiment of the present disclosure, there is provided **a negative** electrode for lithium-free secondary battery comprising: a conductive metal layer; and a lithium electrodeposition induction layer formed on the conductive metal layer and containing an intermetallic compound in which copper and zinc are bonded.

In such a negative electrode, the lithium electrodeposition induction layer may include an intermetallic compound in which copper and zinc are bonded at a wight ratio of 2: 8 to 9.5: 0.5. In a further embodiment, the lithium electrodeposition induction layer may include an intermetallic compound in which copper and zinc are bonded at a wight ratio of 3:7 to 9:1 and which contains 0.01 to 5% by weight of oxygen based on the weight of the total intermetallic compound.

Further, in the negative electrode, the lithium electrodeposition induction layer may have a thickness of 0.05 to 2 *µ*m.

Meanwhile, according to another embodiment of the present disclosure, there is provided a method for manufacturing the negative electrode of the one embodiment, the method comprising electrically depositing copper and zinc on a conductive metal layer using an electrolyte containing a copper precursor, a zinc precursor, and a pyrophosphate.

In such a manufacturing method, the electrodeposition step may progress by applying a voltage to an electrodeposition system which includes a working electrode containing the conductive metal layer; a counter electrode containing an alloy of copper and zinc; and an electrolyte.

Further, the manufacturing method may, after the electrodeposition step, further comprise a step of heat treating the electrodeposited material at a temperature of 200°C or more under a vacuum or inert gas atmosphere. By the progress of the heat treatment step, the chemical composition of the lithium electrodeposition induction layer changes, and the electrochemical properties of the negative electrode can be further improved.

Meanwhile, according to yet another embodiment of the present disclosure, there is provided a lithium-free secondary battery comprising: a positive electrode containing a positive electrode active material; the negative electrode of the one embodiment; and a separator or an electrolyte layer interposed between the positive electrode and the negative electrode.

In such a lithium-free secondary battery, a lithium metal layer is electrodeposited on the lithium electrodeposition induction layer of the negative electrode in a charging process, thereby acting as a negative electrode active material.

### [Advantageous Effects]

The negative electrode according to one embodiment of the present disclosure can be manufactured by a simple process of electrically depositing an intermetallic compound in which copper and zinc are bonded on a conductive metal layer.

It was confirmed that by forming a lithium electrodeposition induction layer containing such an intermetallic compound, the interfacial resistance and overvoltage of the negative electrode can be greatly reduced in the process of electrodeposition of the lithium metal layer when the battery is charged. As resistance and overvoltage decrease during electrodeposition of this lithium metal layer, the lithium dendrite growth and side reactions in the negative electrode of a lithium-free secondary battery can be suppressed, and the life time characteristics of a lithium-free secondary battery can be improved. Additionally, due to the reduction in resistance or the like, the electrochemical properties of the lithium-free secondary battery can be improved.

Accordingly, according to the present disclosure, not only the negative electrode of a lithium-free secondary battery can be manufactured thinly by a simplified process, but the electrochemical characteristics and life time characteristics of the lithium-free secondary battery can be improved.

### [BRIEF DESCRIPTION OF THE DRAWINGS]

FIG. 1 is a diagram schematically showing an example of an electrodeposition system used for manufacturing a negative electrode according to an embodiment of the disclosure;
FIGS. 2a to 2c are electron microscope photographs of the negative electrode surfaces formed in Comparative Example 2 (FIG. 2a), Example 1 (FIG. 2b), and Example 2 (FIG. 2c);
FIG. 3 is an electron microscopy photograph showing the change in film quality of the lithium electrodeposition induction layer before and after heat treatment in the negative electrode manufacturing process of Example 5;
FIG. 4 is a graph showing the results of evaluating overvoltage during lithium electrodeposition for half-cells including the negative electrodes of Comparative Example 1 and Example 2; and
FIG. 5 is a graph showing the results of evaluating the life time characteristics of half-cells including the negative electrodes of Comparative Examples 1 and 2 and Examples 1 and 2.

### [DETAILED DESCRIPTION OF THE EMBODIMENTS]

Throughout the present disclosure, when a portion is referred to as "including" or "comprising" a certain component, it means that the portion can further include other components, without excluding the other components, unless otherwise stated.

Throughout the present disclosure, the terms "about or approximately" or "substantially" are intended to have meanings close to numerical values or ranges specified with an allowable error and intended to prevent accurate or absolute numerical values disclosed for understanding of the present invention from being illegally or unfairly used by any unconscionable third party. Throughout the present disclosure, the term "step of" does not mean "step for."

Throughout the present disclosure, the term "combinations of" included in Markush type description means mixture or combinations of one or more components described in Markush type and thereby means that the disclosure includes one or more selected from the components.

Further, throughout the present disclosure, the term "lithium-free secondary battery" may refer to a secondary battery in which, in the state before charge and discharge, for example, in the state right after manufacturing, a separate negative electrode active material layer, such as a lithium metal layer, a lithium alloy layer, or other carbon or silicon-containing layer does not exist on a negative electrode current collector (e.g., a negative electrode current collector which includes a conductive metal layer such as copper, and the negative electrode current collector including a lithium electrodeposition induction layer). Therefore, the "lithium-free secondary battery" can be defined as a battery which does not include a separate negative electrode active material layer (e.g., a lithium metal layer, etc.) on the negative electrode current collector in the state before charge and discharge. However, in addition to the negative electrode active material layer, it goes without saying that addition of a separate insulating layer or other functional layer is not limited.

Further, the term "lithium-free secondary battery" may not be interpreted as limiting the presence of a lithium-containing positive electrode active material, or limiting the presence of a lithium metal layer or a lithium-containing compound electrodeposited on the negative electrode along with the progress of charge/discharge.

Hereinafter, based on the above definitions, embodiments of the present disclosure will be described in detail. These embodiments are set forth to illustrate the present disclosure, and the scope of the present disclosure is not intended to be limited thereby. The present disclosure is only defined by the claims to be described hereinafter.

According to one embodiment of the disclosure, there is provided a negative electrode for lithium-free secondary battery comprising: a conductive metal layer; and a lithium electrodeposition induction layer formed on the conductive metal layer and containing an intermetallic compound in which copper and zinc are bonded.

It was confirmed that the interfacial resistance and overvoltage of the negative electrode can be reduced by the formation of an intermetallic compound in which copper and zinc are chemically bonded. This appears to be due to the zinc component contained in the intermetallic compound. Due to this reduction in interfacial resistance and overvoltage, not only the electrochemical properties of the lithium-free secondary battery be improved, but also uniform electrodeposition of lithium metal is induced, thereby suppressing the growth of lithium dendrites, etc., which may result in improved life time characteristics of the lithium-free secondary battery.

In addition, the negative electrode forms an intermetallic compound of copper and zinc formed by electrodeposition, instead of simply forming a lithiophillic metal such as zinc on the conductive metal layer. In the battery operation process, lithiophillic metals such as zinc may cause volume expansion while causing an alloy reaction with lithium, and such volume expansion can be a factor that makes the life time characteristics of the lithium-free secondary battery insufficient. Unlike the same, the intermetallic compound can alleviate **volume expansion** caused by an alloy reaction with lithium, and thus can further improve the life time characteristics of a lithium-free secondary battery.

In addition, the negative electrode of the one embodiment not only can be manufactured by a simplified process of electrodeposition, but also can be formed with a thin thickness that does not include a three-dimensional structure or the like. As a result, the high energy density of the lithium-free secondary battery can be fully utilized using the negative electrode.

Meanwhile, in the negative electrode for a lithium-free secondary battery according to the one embodiment, the conductive metal layer may have a thickness equivalent to that of a general negative electrode current collector, for example, a thickness of 3 to 500 *µ*m, or 5 to 100 *µ*m, or 7 to 30 *µ*m.

Further, the conductive metal layer is a metal that has relatively low reactivity and high conductivity without causing any chemical change in the battery, and can be formed by using any metal previously known to be usable as a negative electrode current collector.

Specific examples thereof include metals such as stainless steel, aluminum, nickel, titanium or copper, or copper, aluminum or stainless steel whose surface is treated with carbon, nickel, titanium, silver, or the like. This conductive metal layer can be formed in various forms such as a film, a sheet, a foil, a net, a porous body, a foaming body, or a non-woven fabric structure. However, taking into consideration the excellent conductivity and lightweight property of the negative electrode current collector and the negative electrode, the conductive metal layer may include copper, and more specifically, the conductive metal layer may be a copper foil.

In the negative electrode of one embodiment, a lithium electrodeposition induction layer is formed on the conductive metal layer. This lithium electrodeposition induction layer may include, for example, an intermetallic compound in which copper and zinc are bonded, which is formed by electrodeposition on the conductive metal layer.

More specifically, the intermetallic compound may be a compound in which copper and zinc are chemically bonded at a weight ratio of 2:8 to 9.5:0.5, or 3:7 to 9:1, or 3:7 to 6:4. In one specific embodiment, the intermetallic compound does not contain additional metal elements and may be an intermetallic compound that does not substantially contain oxygen.

If the content of copper contained in the intermetallic compound is excessively high, the interfacial resistance and overvoltage of the negative electrode increase to thereby induce lithium dendrite growth, and the electrochemical properties and life time characteristics of the lithium-free secondary battery may deteriorate. Conversely, if the zinc content is excessively high, side reactions between the negative electrode and the electrolyte, volume expansion of the negative electrode, and the like increase, so that the life time characteristics of the lithium-free secondary battery may be reduced.

As will be described in more detail below, the lithium electrodeposition induction layer containing the intermetallic compound may be formed by electrodeposition, followed by further heat treatment. This appears to be **because,** due to such a heat treatment, a portion of the zinc component diffuses from the lithium electrodeposition inducing layer to the periphery of the conductive metal layer or the like, and a trace amount of the zinc component volatilizes. As a result, the chemical composition of the lithium electrodeposition induction layer changes, while fine defects are removed, so that the lithium electrodeposition induction layer can be made further uniform and dense.

In a specific example, the lithium electrodeposition induction layer after the heat treatment may include an intermetallic compound in which copper and zinc are chemically bonded at a weight ratio of 3:7 to 9:1, or 5:5 to 9:1, or 7:3 to 9:1, and which contains oxygen in an amount of 5% by weight or less, or 0.01 to 5% by weight, or 0.1 to 3% by weight, based on the weight of the total intermetallic compound.

As the negative electrode of one embodiment includes a lithium electrodeposition induction layer that is made uniform and dense by the heat treatment, the interfacial resistance of the negative electrode can be further reduced, and the electrochemical properties or life time characteristics of the lithium-free secondary battery can also be improved. This is presumably because the lithium electrodeposition induction layer after heat treatment induces more uniform lithium electrodeposition and can further suppress the formation of lithium dendrites.

The above-mentioned lithium electrodeposition induction layer may be formed on the conductive metal layer to a thickness of 0.05 to 2 *µ*m, or 0.1 to 1 *µ*m, or 0.1 to 0.5 *µ*m. By forming such a thickness, the energy density reduction of the battery caused by the increase in the thickness of the negative electrode can be reduced while effectively reducing the resistance and overvoltage of the lithium-free secondary battery.

Meanwhile, according to yet another embodiment of the disclosure, a method for manufacturing a negative electrode for a lithium-free secondary battery of one embodiment described above is provided. Such a method for manufacturing the negative electrode may include a step of electrically depositing copper and zinc on a conductive metal layer using an electrolyte containing a copper precursor, a zinc precursor, and a pyrophosphate.

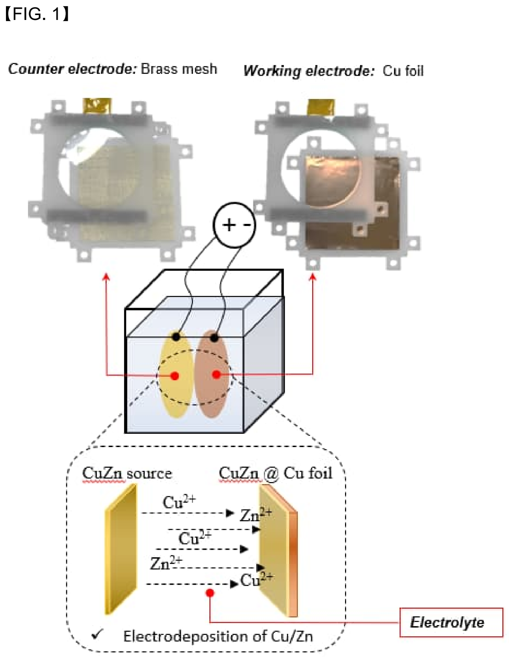

In such a manufacturing method, the electrical deposition step may be progressed by applying a voltage to an electrical deposition system which includes a working electrode containing the conductive metal layer; a counter electrode containing an alloy of copper and zinc; and an electrolyte. FIG. 1 shows one example of such an electrodeposition system, and in this electrodeposition system, an example is shown in which a copper foil is used as the working electrode and a brass mesh (an alloy containing copper and zinc in a weight ratio of 65:35) is used as the counter electrode.

For example, if a voltage of 1.5V or more, or 1.5V to 3.0V is applied to this electrodeposition system and electrodeposition progresses for 1 to 30 minutes, or 5 to 20 minutes, or 7 to 15 minutes, ions of copper and zinc move from the counter electrode to the working electrode, and an intermetallic compound in which copper and zinc are bonded is deposited on the conductive metal layer, thereby forming the lithium electrodeposition induction layer. In particular, by controlling the above electrodeposition time, the life time characteristics of the secondary battery can be further improved.

At this time, the electrolyte may include a copper precursor, a zinc precursor, and a pyrophosphate. As the copper precursor and the zinc precursor, for example, copper salts and sulfates such as copper sulfate or zinc sulfate may be used. In addition, the pyrophosphate is an additive that induces electrodeposition, and may include a metal pyrophosphate, for example, K₂P₂O₇, which is a pyrophosphate of an alkali (earth) metal, or the like.

Further, in a specific example, the electrolyte may be an aqueous solution which contains a metal pyrophosphate at a concentration of 70 to 800mM, or 80 to 300mM, or 90 to 200mM, a copper precursor at a concentration of 10 to 50Mm, or 20 to 40Mm, and a zinc precursor at a concentration of 10 to 50mM, or 20 to 40mM. In this electrolyte, the concentration of the copper precursor and/or zinc precursor is adjusted, so that a chemical composition of the intermetallic compound of copper and zinc contained in the lithium electrodeposition induction layer, for example, a bonding ratio of copper and zinc, can be adjusted.

Further, the shape of the lithium electrodeposition induction layer can be adjusted by adjusting the concentration of the metal pyrophosphate in the electrolyte. For example, by adjusting the concentration of the metal pyrophosphate to 80 to 300mM or the like, the lithium electrodeposition induction layer is formed into a thin film shape, so that the negative electrode of the lithium-free secondary battery can be formed to be thinner and have the electrochemical properties such as high energy density. Unlike the same, if the concentration of the metal pyrophosphate is too high or the applied voltage in the electrical deposition step is too high, the intermetallic compound contained in the lithium electrodeposition induction layer is formed in a branched microstructure, which may be undesirable in terms of life time characteristics of a lithium-free secondary battery or uniform electrodeposition of the lithium metal layer during charging and discharging.

Meanwhile, in the manufacturing method of the other embodiments described above, a step of surface treating the conductive metal layer with a sulfuric acid solution or the like to remove oxides on the surface of the conductive metal layer may be further progressed before the electrodeposition step. Thereby, the lithium electrodeposition induction layer can be favorably formed and the resistance of the negative electrode of one embodiment can be further lowered.

Further, the negative electrode manufacturing method of the other embodiments may further include a step of heat treating the electrodeposited material under a vacuum and/or inert gas atmosphere at a temperature of 200°C or more, or 200 to 600°C, or 200 to 400°C, after the electrodeposition step. By the progress of such heat treatment, the chemical composition of the lithium electrodeposition induction layer changes, while fine defects are removed, so that the lithium electrodeposition induction layer can be made further uniform and dense, and a better lithium electrodeposition induction layer can be formed.

Meanwhile, according to a further embodiment of the disclosure, a lithium-free secondary battery comprising the negative electrode of one embodiment described above is provided. Such a lithium-free secondary battery may include, for example, the negative electrode of one embodiment described above; a positive electrode facing the negative electrode and containing a positive electrode active material; and a separator or electrolyte layer interposed between the positive electrode and the negative electrode. Additionally, the lithium-free secondary battery may further include an electrolyte containing a lithium salt and a non-aqueous organic solvent along with the separator.

In such a lithium-free secondary battery, the negative electrode does not include a separate negative electrode active material layer before charge and discharge. However, along with the progress of charge and discharge of the lithium-free secondary battery, lithium ions moved from the positive electrode may be electrodeposited on the lithium electrodeposition induction layer of the negative electrode, for example, a thin film of an intermetallic compound in which copper and zinc are bonded, thereby forming a lithium metal layer or a lithium alloy layer. This lithium metal layer or lithium alloy layer can act as a negative electrode active material.

Moreover, a solid electrolyte interphase may be further formed on the lithium electrodeposition induction layer of the negative electrode by the reaction of lithium ions and electrolyte during initial charging and discharging. This solid electrolyte interphase may contain, for example, lithium fluoride, and may suppress further side reactions with the electrolyte.

Meanwhile, in the lithium-free secondary battery of the further embodiments, the positive electrode may include a positive electrode current **collector** and a positive electrode active material layer located on the positive electrode current collector.

Such a positive electrode can be manufactured by mixing an active material and a binder, and optionally, a conductive material, a filler, or the like in a solvent to prepare a positive electrode slurry composition, and coating the slurry composition onto a positive electrode current collector.

The positive electrode current collector may generally have a thickness of 3 to 500 *µ*m.The positive electrode current collector is not particularly limited as long as it has high conductivity without causing any chemical changes in a battery, and for example, copper, stainless steel, aluminum, nickel, titanium, fired carbon, or aluminum or stainless steel whose surface is treated with carbon, nickel, titanium, silver, or the like may be used. In addition, the current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

Further, the positive electrode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., **LiNi_{1-Y1}Co_{Y1}O₂** (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or **Li(Niₚ₁Co_{q1}Mnᵣ₁)O₄** (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., **Li₁₊ₐFe₁₋ₓMₓ(PO_{4-b})X_{b}** (where M is at least one selected from Al, Mg, and Ti, X is at least one selected from F, S and N, -0.5≤a≤+0.5, 0≤x≤0.5, 0≤b≤0.1), or the like, and any one thereof or a mixture of two or more thereof may be used.

Among these, the positive electrode active material includes a lithium metal oxide containing lithium; and two or more transition metals selected from the group consisting of nickel, manganese, cobalt, and aluminum, wherein the lithium metal oxide may contain nickel in an amount of 50 mol % or more, or 60 to 99 mol %, or 70 to 95 mol % based on the total transition metal content excluding lithium. Such a lithium metal oxide may be represented, for example, by the following Chemical Formula 1:

[Chemical Formula 1] LiₓNiₐCo_{b}M¹_{c}M²₄O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.50≤a<1.0, or 0.60≤a≤0.99, or 0.70≤a≤0.9. Further, 0<b≤0.3, 0<c≤0.3, and 0≤d≤0.1.

The lithium metal oxide containing such a high content of nickel is used as a positive electrode active material, and this is combined with the negative electrode of one embodiment, so that the output, capacity characteristics, life time characteristics, etc. of the lithium-free secondary battery can be further improved.

The above-mentioned positive electrode active material may be contained in an amount of 60 to 99% by weight, or 70 to 99% by weight, or 80 to 98% by weight, based on the total weight of the positive electrode active material layer.

Meanwhile the conductive material contained in the positive electrode active material layer is a component for further improving the conductivity of the positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium-free secondary battery and further enhance output characteristics.

Typically, the conductive material may be contained in an amount of 1 to 20% by weight, or 1 to 15% by weight, or 1 to 10% by weight, based on the total weight of the positive electrode active material layer.

The binder selectively included in the positive electrode active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the lithium-free secondary battery of the other embodiments may further include an electrolyte containing a non-aqueous organic solvent and a lithium salt.

The lithium salt contained in the electrolyte is used as a medium for transferring ions within a secondary battery. For example, the lithium salt may include Li⁺ as a cation, and may together include an anion selected from the group consisting of F⁻, Cl⁻, Br, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF6⁻, SbF₆⁻, CH₃SO₃⁻, (CF₃CF₂SO₂)₂N⁻, (CF₃SO₂)₂N⁻, (FSO₂)₂N⁻, BF₂C₂O4⁻, BC₄O₈⁻, PF₄C₂O4⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBF₂(C₂O₄), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 0.4M to 6M, or at a concentration of 0.5M to 5M.

In a more specific example, the electrolyte may include the lithium salt at a relatively low concentration of 0.4M or more and less than 2M, or 0.5M to 1.5M, but may include the lithium salt at a high concentration of 2M to 6M, or 2.5M to 5.5M. By using an electrolyte containing such a high concentration of lithium salt, the output characteristics of the secondary battery can be further improved.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent. However, in consideration of the stability of the lithium metal layer electrodeposited on the lithium electrodeposition induction layer, the non-aqueous organic solvent preferably includes a carbonate-based solvent or an ether-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the above-mentioned lithium-free secondary battery may further include a porous separator interposed between the positive electrode and the negative electrode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable **to apply** porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 *µ*m, and the thickness may generally range from 5 to 300 *µ*m, but are not limited thereto.

In addition, in the other embodiments of the lithium-free secondary battery, the separator may be integrated with the electrolyte and interposed between the positive electrode and the negative electrode in the form of an electrolyte layer or an electrolyte film. In one example, the electrolyte layer or the electrolyte film may be a form containing the above-mentioned lithium salt and non-aqueous organic solvent in a polymer matrix, or a form containing a solid electrolyte. Further, as the polymer matrix, a well-known polymer-based solid electrolyte or the like may be used.

The lithium-free secondary battery of the embodiments described above may be a semi-solid battery using a combination of a liquid electrolyte and a solid electrolyte or an all-solid-state battery having a solid electrolyte layer, depending on the presence/absence of the electrolyte layer, the shape thereof, and the like.

Meanwhile, the lithium-free secondary battery of the other embodiment can be manufactured according to a conventional method in the art. For example, the lithium-free secondary battery can be prepared either by housing an electrode assembly including a positive electrode, a negative electrode, and a separator in a case, and injecting and impregnating the above-mentioned electrolyte in the case, or by housing an electrode assembly including a positive electrode, a negative electrode, and an electrolyte layer in a case.

Such a lithium-free secondary battery can be applied not only to a battery cell used as power sources for small-sized devices, but can also be particularly suitably used as a unit battery in a battery module, which is a power source for medium-sized and large-sized devices.

Hereinafter, preferred examples of the invention, comparative examples, and experimental examples for evaluating them will be described. However, the following examples are only a preferred embodiment of the invention, and are not intended to limit the scope of the invention.

### Comparative Examples 1, 2 and Examples 1 and 2: Manufacture of Negative electrode for lithium-free secondary battery

First, the copper foil itself was used as the negative electrode of Comparative Example 1. In addition, the negative electrodes of Comparative Example 2 and Examples 1 and 2 were manufactured by the following method. Pyrophosphate (K₂P₂O₇), copper sulfate, and zinc sulfate were dissolved in DI water solvent at the concentrations (mM) shown in Table 1 below to prepare an electrolyte for electrodeposition.

On the other hand, an electrodeposition system as shown in FIG. 1 was prepared. This electrodeposition system contained a working electrode of copper foil, and a brass mesh (alloy mesh with a weight ratio of Cu:Zn=65:35) as a counter electrode, and each electrode was previously placed in a 1M sulfuric acid aqueous solution for about 30 minutes to remove surface oxides before use.

The working electrode of acid-treated copper foil and the counter electrode of brass mesh were bonded to an electrodepositing jig, and then connected to the (-) and (+) poles of the power source, respectively. The electrodeposition jig with both the working electrode and the counter electrode connected was placed vertically in a water tank containing the electrolyte for electrical deposition, and then the electrical deposition process was progressed under constant voltage (2.0V) conditions for 10 minutes, and a lithium electrodeposition induction layer containing an intermetallic compound in which copper and zinc were bonded was formed on the copper foil.

After the electrodeposition process, the copper foil on which the lithium electrodeposition induction layer was formed was separated from the electrodeposition jig, and then washed in **DI** water to remove all electrolyte residues used in the electrodeposition process. Through the above process, negative electrodes for lithium-free secondary batteries of Comparative Example 2 and Examples 1 and 2 were manufactured, respectively.

**[Table 1]**

| | Electrodeposited electrolyte concentration | Electrod eposition applied | | Electrode position time (min) | | Intermetal lic compoun d | | Intermet allic compou |
|---|---|---|---|---|---|---|---|---|
| | | | | voltage (V) | | compositi on (wt.%) | | nd formula |
| | K₂P ₂O₇ (m M) | coppe r sulfat e (mM) | zinc sulfat e (mM) | | | Cop per | Zi nc | |
| Compar ative Example 1 | - | - | - | 2.0 | 10 | 100 | 0 | Cu |
| Example 1 | 100 | 40 | 10 | 2.0 | 10 | 73 | 27 | CU₇Zn₃ |
| Example 2 | 100 | 10 | 40 | 2.0 | 10 | 27 | 73 | Cu₃Zn₇ |
| Compar ative Example 2 | 100 | 0 | 50 | 2.0 | 10 | 0 | 10 0 | Zn |

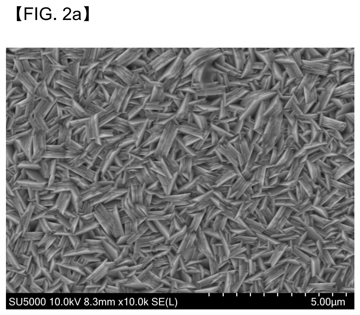

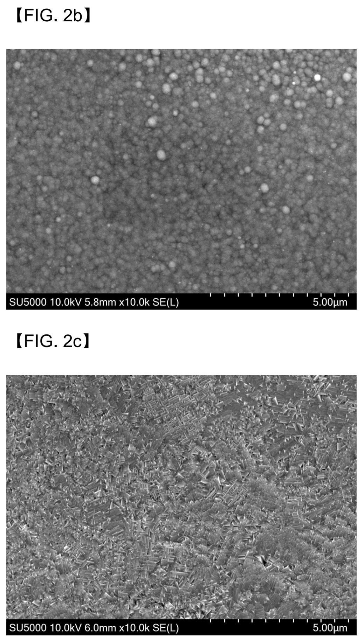

The negative electrode surfaces formed in Comparative Example 2 and Examples 1 and 2 were analyzed using an electron microscope, and are shown in FIGS. 2a to 2c, respectively. Through this, it was confirmed that in Examples 1 and 2, the lithium electrodeposition induction layer containing the intermetallic compound was favorably formed.

### Examples 3 to 5: Manufacture of negative electrode for lithium-free secondary battery

The negative electrode sample manufactured in Example 2 was placed in a vacuum furnace (-0.1 MPa), and then heat-treated under an Ar gas atmosphere at a flow rate of 5 (SLPM) at each temperature listed in Table 2 below. The heat treatment process time was set to TS (time required to reach the target temperature shown in Table 2 below) = 1hr, Tm (time required to hold under the target temperature listed in Table 2 below) = 2hr.

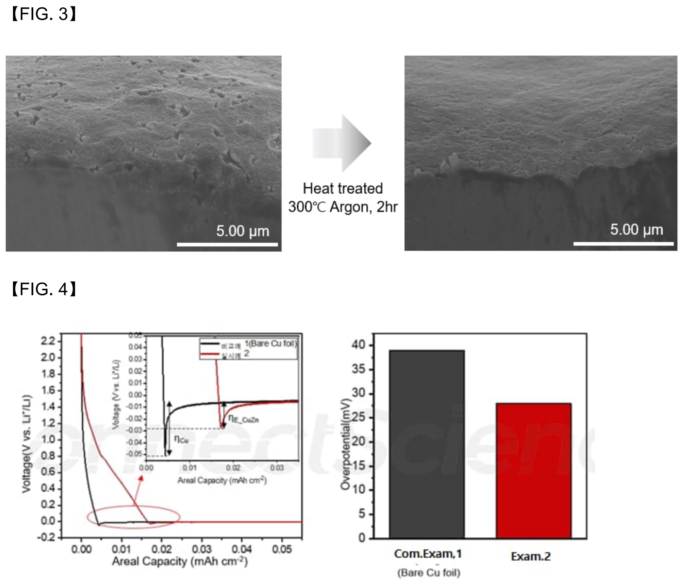

The negative electrodes of Examples 3 to 5 were manufactured through this additional heat treatment. The compositional change of the intermetallic compound contained in the lithium electrodeposition induction layer in the negative electrodes of Examples 3 to 5 was confirmed, and then summarized in Table 2 below. The film quality changes of the lithium electrodeposition induction layer before and after treatment in Example 5 were analyzed by an electron microscope, and shown in FIG. 3.

**[Table 2]**

| | Heat treatment | | Intermetallic compound composition | | Intermetallic compound composition after heat treatment (wt.%) | |
|---|---|---|---|---|---|---|
| | temperature (°C) | before heat treatment (wt.%) | | | | |
| | | copper | zinc | copper | zinc | oxygen |
| Example 3 | 200 | 27 | 73 | 75 | 22 | 3 |
| Example 4 | 250 | 27 | 73 | 81 | 16 | 3 |
| Example 5 | 300 | 27 | 73 | 88 | 10 | 2 |

Referring to Table 2 and FIG. 3, the compositional changes of the intermetallic compound contained in the lithium electrodeposition induction layer through the heat treatment was confirmed. In addition, it was confirmed that fine defects contained in the lithium electrodeposition induction layer were removed and the film quality became denser.

### Test Example 1: Overvoltage evaluation

Half-cells using the negative electrodes of Comparative Example 1 and Example 2 were manufactured. Such half-cells contained the negative electrode and lithium foil as a counter electrode, and contained 75 µl of electrolyte of 0.6M LiBF₄ + 0.6M LiBF₂(C₂O₄) in FEC/DEC (1:2 volume ratio). For such half-cells, when lithium with a capacity of 0.5 mAh·cm⁻² was electrodeposited at 10 µA·cm⁻², the lithium electrodeposition overvoltage applied to each negative electrode was evaluated, and the evaluation results are shown in FIG. 4.

Referring to FIG. 4, it was confirmed that during lithium electrodeposition using the negative electrode of Example 2, a lower lithium electrodeposition overvoltage was applied. Through this, it was confirmed that uniform electrodeposition of lithium was induced on the lithium electrodeposition induction layer included in the negative electrodes of Examples.

### Test Example 2: Evaluation of battery life time characteristics

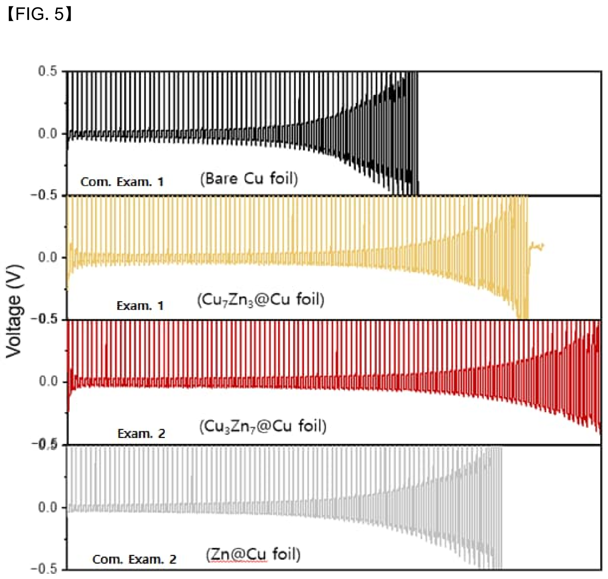

Half-cells containing the negative electrodes of Comparative Examples 1 and 2 and Examples 1 and 2 were manufactured in the same manner as in Test Example 1. While charge and discharge of such half-cells was progressed under conditions of 1mAh·cm⁻²@0.5mA·cm⁻² (0.5C, cut-off voltage: 1V), a cycle in which stable charge-discharge was progressed was evaluated through a galvanic charge-discharge test. Each evaluation result was compared and shown in FIG. 5.

Referring to FIG. 5, it was confirmed that stable charge and discharge was progressed over a longer cycle in the secondary battery containing the negative electrodes of Examples. In particular, it was confirmed that stable charge and discharge was progressed over the longest cycle in the secondary battery containing the negative electrode of Example 2.

## Claims

1. A negative electrode for lithium-free secondary battery comprising:
a conductive metal layer; and
a lithium electrodeposition induction layer formed on the conductive metal layer and containing an intermetallic compound in which copper and zinc are bonded.

2. The negative electrode for lithium-free secondary battery according to claim 1, wherein the conductive metal layer includes copper.

3. The negative electrode for lithium-free secondary battery according to claim 1, wherein the lithium electrodeposition induction layer includes an intermetallic compound in which copper and zinc are bonded at a wight ratio of 2: 8 to 9.5 : 0.5.

4. The negative electrode for lithium-free secondary battery according to claim 1, wherein the lithium electrodeposition induction layer includes an intermetallic compound in which copper and zinc are bonded at a wight ratio of 3:7 to 9:1 and which contains 0.01 to 5% by weight of oxygen based on the weight of the total intermetallic compound.

5. The negative electrode for lithium-free secondary battery according to claim 1, wherein the lithium electrodeposition induction layer has a thickness of 0.05 to 2 *µ*m.

6. A method for manufacturing the negative electrode for lithium-free secondary battery of claim 1, the method comprising electrically depositing copper and zinc on a conductive metal layer using an electrolyte containing a copper precursor, a zinc precursor, and a pyrophosphate.

7. The method for manufacturing the negative electrode for lithium-free secondary battery according to claim 6, wherein the electrodeposition step progresses by applying a voltage to an electrodeposition system which includes a working electrode containing the conductive metal layer; a counter electrode containing an alloy of copper and zinc; and an electrolyte.

8. The method for manufacturing the negative electrode for lithium-free secondary battery according to claim 6, wherein the electrolyte is an aqueous solution containing metal pyrophosphate at a concentration of 70 to 800mM, a copper precursor at a concentration of 10 to 50mM, and a zinc precursor at a concentration of 10 to 50mM.

9. The method for manufacturing the negative electrode for lithium-free secondary battery according to claim 6, wherein after the electrodeposition step, the method further comprises heat treating the electrodeposited material at a temperature of 200°C or more under a vacuum or inert gas atmosphere.

10. A lithium-free secondary battery comprising:
a positive electrode containing a positive electrode active material;
the negative electrode of claim 1; and
a separator or an electrolyte layer interposed between the positive electrode and the negative electrode.

11. The lithium-free secondary battery according to claim 10, further comprising a lithium metal layer which is electrodeposited on the lithium electrodeposition induction layer of the negative electrode by charging a lithium-free secondary battery.
